# EUROPEAN PATENT APPLICATION

(11) **EP 4 683 183 A1**
(43) Date of publication of application: **21.01.2026**
(21) Application number: 24188917.9
(22) Date of filing: 16.07.2024
(51) Int. Cl.: H02K 7/08, H02K 5/173, F16C 19/16, H02K 7/116, H02K 11/225, H02K 11/40, H02K 15/14

(54) **ELECTRIC MOTOR, ASSOCIATED DRIVE UNIT AND ASSOCIATED ELECTRIC VEHICLE**

(71) Applicant: VOLVO TRUCK CORPORATION, 405 08 Göteborg (SE)
(72) Inventor: BARILLOT, Thomas, 69440 MORNANT (FR); TERRAT, Jean, 42520 MALLEVAL (FR)
(74) Representative: Lavoix

(57) **Abstract**

An electric motor (20) comprises a housing (40) with a main part (42) and a side cover (44); a stator (50); a rotor (52) having a rotor shaft (56); and a rolling bearing assembly (70) located on a first side (50A) of the stator. The rotor shaft is mounted with the side cover via the first rolling bearing assembly, which transmit axial loads exerted on the rotor shaft to the side cover. The side cover is fixedly secured to the main part, located on the first side of the stator. The side cover abuts against the first rolling bearing assembly, so that said axial loads are transmitted to the main part by the side cover. When the side cover is not secured to the main part, the housing is open, allowing insertion of the rotor into the stator via the first side of the stator.

## Description

### TECHNICAL FIELD

The disclosure relates generally to electric motors and more precisely to electro mobility applied to vehicles. In particular aspects, the disclosure relates to an electric motor, to an associated drive unit and to an associated electric vehicle. The disclosure can be applied to heavy-duty vehicles, such as trucks, buses, and construction equipment, and also to other vehicles, such as automobiles, among other vehicle types. Although the disclosure may be described with respect to a particular vehicle, the disclosure is not restricted to any particular vehicle.

### BACKGROUND

To decrease environmental impacts of heavy-duty vehicles, transport industry is moving towards electro mobility to replace internal combustion engines by electric motors. Traditionally, the electric motor is positioned in the same place as the internal combustion engine it replaces, i.e. under the truck cab, and uses the same transmission.

However, positioning one or more electric motors as close as possible to the wheels, directly on their axle, is advantageous. Such configuration is known as electric axle, or "E-axle", configuration and improves performance of the vehicle, by reducing losses in the transmission. In addition, such configuration is more compact, freeing up space available for batteries.

One of the challenges for such configuration is to make the electric axle as compact as possible, so as not to interfere with other vehicle features, such as the suspension or braking system. Another challenge is ensuring the electric motor can be easily assembled and maintained, to decrease operating costs of the vehicle. The invention aims to provide a particularly compact and easy-to-maintain electric motor.

### SUMMARY

According to a first aspect of the disclosure, an electric motor, for an electric vehicle, comprises:
- a housing, comprising a main part and a side cover distinct from the main part,
- a stator, mounted inside of the main part of the housing and extending along a main axis,
- a rotor comprising a rotor shaft, the rotor being mounted inside of the main part of the housing and coaxially mounted inside of the stator, and
- a first rolling bearing assembly, the rotor shaft being mounted with the side cover of the housing via the first rolling bearing assembly, the first rolling bearing assembly being located on a first side of the stator, along the main axis, the first rolling bearing assembly being configured to transmit axial loads exerted on the rotor shaft, along the main axis, to the side cover.
In an assembled configuration of the electric motor:
- the side cover is fixedly secured to the main part,
- the side cover is crossed by the main axis and located on the first side of the stator, and
- the side cover abuts against the first rolling bearing assembly along the main axis, so that said axial loads exerted on the rotor shaft are transmitted to the main part of the housing by the side cover.
Furthermore, when the side cover is not secured to the main part, the housing is open so as to allow insertion of the rotor into the stator via the first side of the stator.

The first aspect of the disclosure may seek to increase the axial compactness of the electric motor, thanks to the side cover acting simultaneously as a cover and as an axial stop for the first rolling bearing assembly. The first aspect of the disclosure may also seek to facilitate assembly and maintenance of the electric motor, by allowing access to the rotor shaft and to the first rolling bearing assembly once the side cover is removed, and allowing insertion of the rotor shaft and of the first rolling bearing assembly in the stator through the opening created by the removal of the side cover. A technical benefit may include improving the axial compactness of the electric motor and facilitating its assembly and maintenance.

Optionally in some examples, the electric motor further comprises an axial stop and, in the assembled configuration of the electric motor, the axial stop is fixedly secured to the rotor shaft, and inner rings of the first rolling bearing assembly are axially secured, along the main axis, between a shoulder of the rotor shaft and the axial stop. A technical benefit may include proper operation of the first rolling bearing assembly, by axially securing inner rings of the first rolling bearing assembly between the rotor shaft and the axial stop, while facilitating assembly and maintenance of the electric motor as the axial stop is accessible once the side cover is removed from the main part of the housing.

Optionally in some examples, the side cover comprises a peripheral part and a center part and, in the assembled configuration of the electric motor: the peripheral part is fixedly secured to the main part; the rotor shaft extends through the peripheral part; the first rolling bearing assembly is mounted between the rotor shaft and the peripheral part; the center part is crossed by the main axis and fixedly secured to the peripheral part; and outer rings of the first rolling bearing assembly are axially secured, along the main axis, between the peripheral part and the center part. A technical benefit may include facilitating assembly and maintenance of the electric motor by allowing, firstly, mounting of the peripheral part and of the rotor shaft with the first rolling bearing assembly, and secondly, mounting the center part onto the peripheral part. Another technical benefit may include ensuring proper operation of the first rolling bearing assembly, by axially securing outer rings of the first rolling bearing assembly between the peripheral part and the center part of the side cover.

Optionally in some examples, the first rolling bearing assembly comprises a four-point contact ball bearing, the center part of the side cover comprises an anti-rotation pin and, in the assembled configuration of the electric motor, the four-point contact ball bearing is mounted between the rotor shaft and the peripheral part with radial clearance with the peripheral part, and the anti-rotation pin of the center part is in abutment against an outer ring of the four-point contact ball bearing so as to prevent rotation of said outer ring around the main axis relative to the center part. A technical benefit may include increasing performance of the first rolling bearing assembly by using a four-point contact ball bearing, while facilitating assembly of the electric motor and ensuring proper operation of the four-point contact ball bearing, the center part of the side cover ensuring the anti-rotation of the outer ring of the four-point contact ball bearing.

Optionally in some examples, the first rolling bearing assembly is further configured to transmit radial loads exerted on the rotor shaft, radially to the main axis, to the main part of the housing via the side cover. A technical benefit may include increasing the compactness of the electric motor by suppressing the need for another rolling bearing assembly to bear radial loads.

Optionally in some examples, the first rolling bearing assembly comprises a four-point contact ball bearing and a cylindrical roller bearing. A technical benefit may include ensuring performance and reliability of the first rolling bearing assembly.

Optionally in some examples, the first rolling bearing assembly comprises only a ball bearing. A technical benefit may include ensuring performance and reliability of the first rolling bearing assembly.

Optionally in some examples, the first rolling bearing assembly comprises only a tapered roller bearing. A technical benefit may include ensuring performance and reliability of the first rolling bearing assembly.

Optionally in some examples, the electric motor further comprises grounding electric contacts configured to ground the rotor and wherein the grounding electric contacts are fixedly secured to the side cover in the assembled configuration of the electric motor. A technical benefit may include increasing the compactness of the electric motor by incorporating the grounding electric contacts in the side cover, in addition of its function of closing the housing and its function of axial stop of the first rolling bearing assembly.

Optionally in some examples, the electric motor further comprises a second rolling bearing assembly, the rotor shaft being further mounted with the housing via the second rolling bearing assembly, the second rolling bearing assembly being located on a second side of the stator opposed to the first side, along the main axis. A technical benefit may include ensuring proper assembly of the rotor shaft within the stator.

Optionally in some examples, the second rolling bearing assembly is configured to transmit radial loads exerted on the rotor shaft, radially to the main axis, to the main part of the housing. A technical benefit may include ensuring isostatic support of the rotor relative to the housing.

Optionally in some examples, the electric motor further comprises a gear, located on the second side of the stator and configured to be driven in rotation around the main axis by the rotor shaft.

Optionally in some examples, a diameter of the gear is lower than an internal diameter of rolling elements of the second rolling bearing assembly. A technical benefit may include facilitating assembly and maintenance of the electric motor, as the rotor shaft can be inserted in the stator through the opening formed when the side cover is removed while the gear is assembled with the rotor shaft, as the gear can pass through the rolling elements of the second rolling bearing assembly. During such assembly, the second rolling bearing assembly is disassembled, with internal rings of the second rolling bearing assembly being mounted onto the rotor shaft and with external rings and rolling elements of the second rolling bearing assembly being mounted onto the housing.

Optionally in some examples, the electric motor further comprises a resolver, crossed by the main axis, fixedly secured to the side cover and facing the rotor shaft in the assembled configuration of the electric motor, the resolver being configured to detect rotation of the rotor shaft around the main axis. A technical benefit may include increasing the compactness of the electric motor by incorporating the resolver in the side cover, in addition of its function of closing the housing and its function of axial stop of the first rolling bearing assembly.

Optionally in some examples, the electric motor further comprises a gear, located on the first side of the stator and configured to be driven in rotation around the main axis by the rotor shaft and the rotor shaft extends through the side cover.

Optionally in some examples, the electric motor further comprises two gears, a first gear being located on the first side of the stator and being configured to be driven in rotation around the main axis by the rotor shaft, the rotor shaft extends through the side cover, a second gear being located on the second side of the stator and being configured to be driven in rotation around the main axis by the rotor shaft.

Optionally in some examples, in the assembled configuration of the electric motor, the side cover closes the housing. A technical benefit may include increasing the compactness of the electric motor by adding another function to the side cover.

According to a second aspect of the disclosure, a drive unit, for an electric vehicle, comprises the electric motor described here above, at least one drive shaft, configured to drive at least one drive wheel of the electric vehicle, and a transmission, connected to the electric motor and to the at least one drive shaft so as to be driven by the electric motor and so as to drive the at least one drive shaft.

Optionally in some example, the drive unit further comprises two drive shafts, each configured to drive a drive wheel of the electric vehicle, and a differential, coaxially mounted with the two drive shafts, connected to the transmission and to the two drive shafts and configured to drive the two drive shafts.

According to a third aspect of the disclosure, an electric vehicle comprises at least on drive wheel and the drive unit described here above, the at least one drive wheel being driven by the drive unit.

According to a fourth aspect of the disclosure, a method for assembling the electric motor described here above comprises:
- assembling the main part of the housing and the stator by mounting the stator inside of the main part of the housing,
- assembling the rotor, the side cover and the first rolling bearing assembly by mounting the rotor shaft with the side cover via the first rolling bearing assembly,
- subsequently to said assembling of the main part of the housing and stator and subsequently to said assembling of the rotor, side cover and first rolling bearing assembly, coaxially mounting the rotor inside of the stator, and
- subsequently to said mounting of the rotor inside of the stator, fixedly securing the side cover to the main part to close the housing.

The fourth aspect of the disclosure may seek to provide a method for allowing easy assembly and maintenance of the electric motor. A technical benefit may include facilitating the assembly of the electric motor by assembling the rotor, the side cover and the first rolling bearing assembly outside of the main part of the housing and by inserting this assembly in the stator as one component.

Optionally in some examples, the electric motor further comprises an axial stop, the side cover comprises a peripheral part and a center part and assembling the rotor, the side cover and the first rolling bearing assembly by mounting the rotor shaft with the side cover via the first rolling bearing assembly further comprises:
- mounting the rotor shaft with the peripheral part via the first rolling bearing assembly, so that the rotor shaft extends through the peripheral part,
- subsequently to said mounting of the rotor shaft with the peripheral part, fixedly securing the axial stop to the rotor shaft so as to axially secure inner rings of the first rolling bearing assembly between a shoulder of the rotor shaft and the axial stop,
- subsequently to said fixedly securing of the axial stop to the rotor shaft, fixedly securing the center part to the peripheral part, so that outer rings of the first rolling bearing assembly are axially secured between the peripheral part and the center part,
and fixedly securing the side cover to the main part comprises fixedly securing the peripheral part to the main part.

A technical benefit may include ensuring axial blockage of the first rolling bearing assembly, thanks to the axial stop, and facilitating access to the axial blockage and to the first rolling bearing assembly, thanks to the side cover being in two parts, the center part being fixed to the peripheral part after the securing of the axial stop to the rotor shaft.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary electric vehicle comprising a drive unit according to an example and an electric motor according to another example.
**FIG. 2** is a sectional view of the electric motor of Figure 1.
**FIG. 3** is a larger-scale view of detail III in Figure 2.

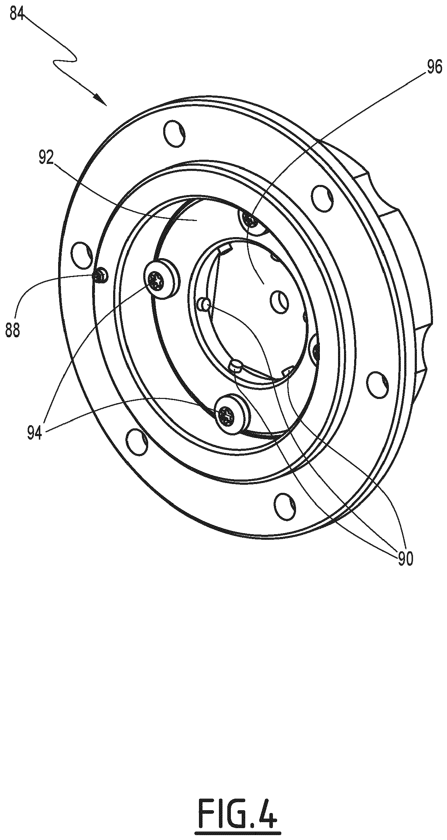

**FIG. 4** is a perspective view of a center part of a side cover of the electric motor of Figures 1 to 3.

### DETAILED DESCRIPTION

The detailed description set forth below provides information and examples of the disclosed technology with sufficient detail to enable those skilled in the art to practice the disclosure.

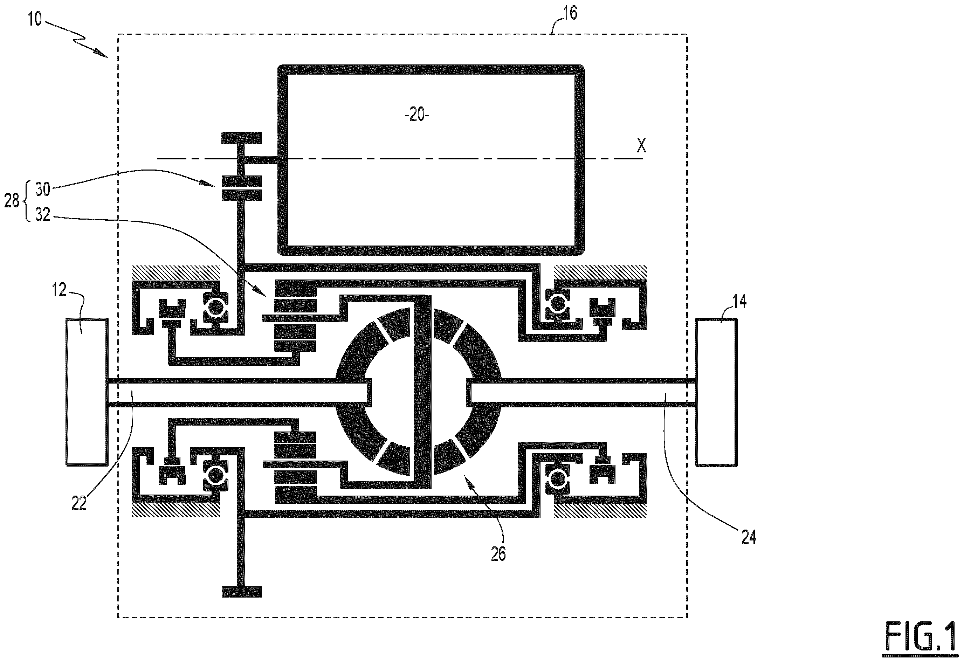

An electric vehicle 10 according to a first example is shown in Figure 1. The electric vehicle 10 is, for example, a heavy-duty vehicle, such as a truck, a bus or a construction equipment, or another type of vehicle, such as an automobile.

In the example, the electric vehicle 10 comprises a left wheel 12, a right wheel 14 and a drive unit 16 for driving the left wheel and the drive wheel. The drive unit 16 is designed to be fitted on a chassis, not shown, of the electric vehicle 10. For example, the wheel drive unit 16 is designed to be fastened to a suspension system of the electric vehicle 10, which, itself, is fastened to the chassis.

In the example, the drive unit 16 comprises an electric motor 20, a left drive shaft 22, a right drive shaft 24, a differential 26 and a transmission 28. The electric motor 20 is connected to the transmission 28, to drive the transmission, which in turn is connected to the differential 26, to drive the differential. The differential is connected to the left and right drive shafts 22, 24 and distribute torque provided by the electric motor to the left and right drive shafts. The left and right drive shafts 22, 24 are respectively connected to the left and right wheels 12, 14 of the vehicle 10, so that the left and right wheels are driven by the drive unit 16 via the left and right drive shafts.

In the example, the transmission 28 comprises a gear train 30 and a planetary gear train 32, engaging with each other. The planetary gear train acts as a gearbox, thus providing multiple reduction ratio to the transmission. Other transmission can be used in the drive unit 16, the transmission 28 being shown as an example only.

In the example, the planetary gear train 32 and the differential 26 are arranged coaxially with the left and right drive shafts 22, 24. More precisely, the planetary gear train 32 is coaxially mounted around the left drive shaft 22 and the differential 26 is coaxially mounted around the left and right drive shafts 22, 24.

As an alternative, not shown, the drive unit comprises only one drive shaft, does not comprise a differential and is configured to drive only one on the left and right wheels 12, 14 of the electric vehicle 10. Preferably, in such an alternative, the electric vehicle comprises two such drive units, each drive unit driving one of the left and right wheels 12, 14.

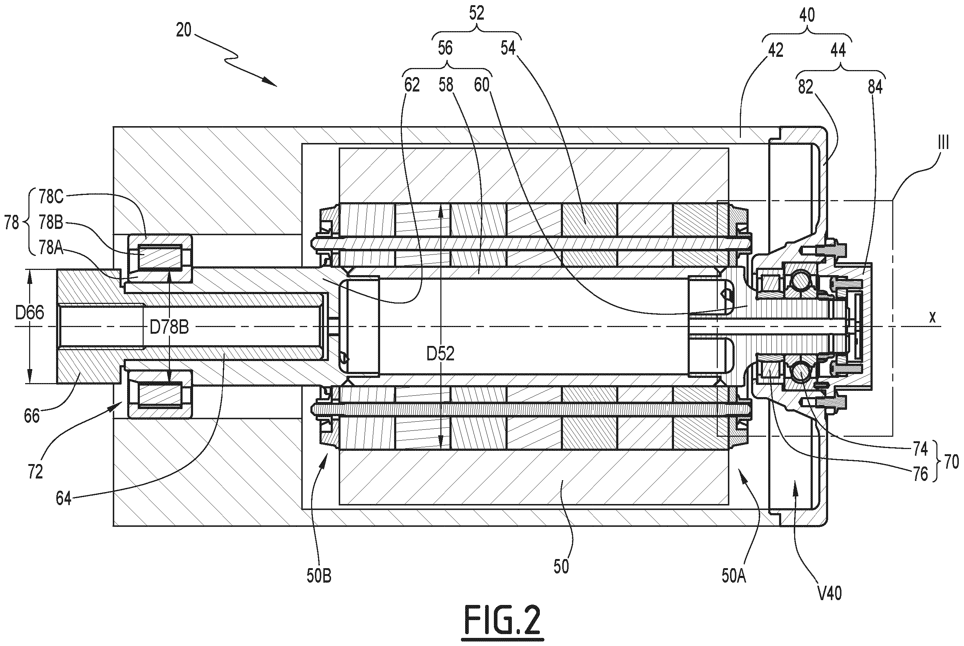

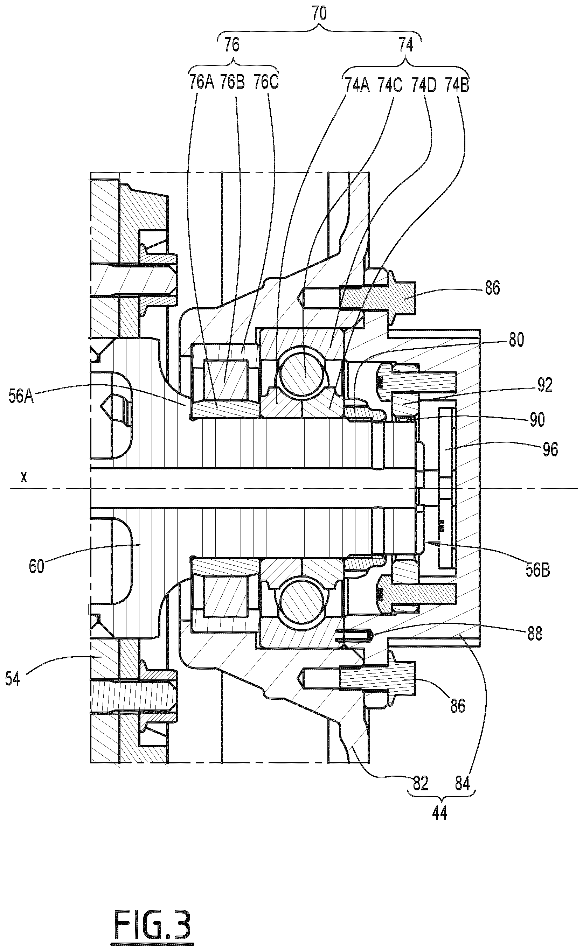

The electric motor 20 is shown with more details in Figures 2 and 3.

The electric motor 20 comprises a housing 40, extending along a main axis X and defining an internal volume V40. The housing 40 comprises a main part 42 and a side cover 44, distinct from the main part 44 and fixed to the main part.

In the example, the main part 42 of the housing 40 is cylindrical. As an alternative, not shown, the housing 40 has another shape but the internal volume V40 has a cylindrical shape. For example, the housing 40 is shared with other components of the drive unit 16, or is a housing of the drive unit.

The electric motor 20 comprises a stator 50, which is only represented schematically. In the example, the stator 50 comprises electromagnets, not shown. The stator 50 is mounted inside of the main part 42 of the housing 40, i.e. within the internal volume V40 of the housing, and extends along the main axis X. The stator 50 defines a first side 50A and a second side 50B, located on opposite ends of the stator, i.e. on opposite ends of the internal volume V40, along the main axis X.

The electric motor 20 comprises a rotor 52, mounted inside of the main part 42 of the housing 40, coaxially mounted inside of the stator 50 and extending along the main axis X. The rotor 52 comprises a magnetic assembly 54 and a rotor shaft 56. The magnetic assembly 54 is arranged around the rotor shaft 56 and surrounded by the stator 50 and is, in the example, a set of permanent magnets.

In the example, the rotor shaft 56 comprises a central portion 58, aligned with the stator 50 along the main axis, a first lateral portion 60, offset from the stator 50 along the main axis X and located on the first side 50A of the stator, and a second lateral portion 62, offset from the stator 50 along the main axis X and located on the second side 50B of the stator.

The first and second lateral portions 60, 62 are fixedly secured to the central portion 58, in the example by welding. Other fixation means can be considered, for example an assembly by interference fit. Alternatively, the central portion 58 and the first and second lateral portions 60, 62 are integral, i.e. formed from a single piece.

The electric motor 20 comprises an output shaft 64, extending along the main axis X, and a gear 66, fixedly secured on the output shaft 64. The gear 66 engages with the gear train 30 so as to drive the transmission 28 when the electric motor 20 is powered. In the example, the gear 66 is an input gear of the gear train 30. In the example, the gear 66 is integral with the output shaft 64, i.e. the gear and the output shaft are formed from a single piece.

In the example, the output shaft 64 is distinct from the rotor shaft 56 and fixedly secured to the rotor shaft, more precisely to its first lateral portion 60. In the example, the output shaft 64 is fixedly secured to the rotor shaft by interference fit. As an alternative, not shown, the output shaft 64 is integral with the rotor shaft 56. As an alternative, not shown, the electric motor does not comprise an output shaft and the gear 66 is directly fixedly secured to the first lateral portion 60 of the rotor shaft 56.

In a known manner, when the electric motor 20 is powered, the output shaft 64 is driven in rotation around the main axis X by the rotor shaft 56, so that the gear 66 drives the transmission 30. In addition, the electric motor 20 can also operates as an electric generator if the rotation of the output shaft 64 and of the rotor shaft 56 is forced by the transmission 28, for example during regenerative braking.

The electric motor 20 comprises a first rolling bearing assembly 70, which is located on the first side 50A of the stator 50, along the main axis X. On the first side 50A of the stator 50, the rotor shaft 56 is mounted with the side cover 44 of the housing 40 via the first rolling bearing assembly 70.

The first rolling bearing assembly 70 is configured to transmit axial loads exerted on the rotor shaft 56, along the main axis X, to the side cover 44 of the housing 40 and thus to the main part 42 of the housing, as the side cover is fixed to the main part. In the example, the first rolling bearing assembly 70 is further configured to transmit radial loads exerted on the rotor shaft 56, radially to the main axis X, to the main part 42 of the housing 40 via the side cover 44. Said axial and radial loads are exerted on the rotor shaft 56 by the gear 66 and are for example exerted on the gear by the transmission 28. Hence, the first rolling bearing assembly 70 bears both axial and radial loads.

In the example, the electric motor 20 comprises a second rolling bearing assembly 72, which is located on the second side 50B of the stator 50, along the main axis X. On the second side 50B of the housing 40, the rotor shaft 56 is mounted with the housing 40 via the second rolling bearing assembly 72. The second rolling bearing assembly 72 is configured to transmit radial loads exerted on the rotor shaft 56, radially to the main axis X, to the main part 42 of the housing 40. Hence, the second rolling bearing assembly 72 bears only radial loads.

Preferably, the first rolling bearing assembly 70 comprises a four-point contact ball bearing 74, to bear axial loads, and a cylindrical roller bearing 76, to bear radial loads. In addition, preferably, the second rolling bearing assembly 72 comprises only a cylindrical roller bearing 78, to bear radial loads.

In a known manner, the four-point contact ball bearing 74 comprises two inner rings 74A and 74B, rolling elements 74C and an outer ring 74D; the cylindrical roller bearing 76 comprises an inner ring 76A, rolling elements 76B and an outer ring 76C; and the cylindrical roller bearing 78 comprises an inner ring 78A, rolling elements 78B and an outer ring 78C.

As an alternative, not shown, the first rolling bearing assembly 70 comprises only a ball bearing, to bear radial and axial loads. As an alternative, not shown, the first rolling bearing assembly 70 and the second rolling bearing assembly 72 each comprise only a tapered roller bearing, in a « X » or in a « O » arrangement.

As visible on Figure 3, the electric motor 20 comprises an axial stop 80, which is fixedly secured to the rotor shaft 56, more precisely to its first lateral portion 60, so that inner rings 74A, 74B of the four-point contact ball bearing 74 and the inner ring 76A of the cylindrical roller bearing 76 are axially secured, along the main axis X, between a shoulder 56A of the rotor shaft 56 and the axial stop 80. Thanks to the axial stop 80, axial movement of the inner rings of the first rolling bearing assembly 70 are stopped and axial loads exerted on the rotor shaft 56 are efficiently transmitted to the first rolling bearing assembly 70, more precisely to the rolling elements 74C of the four-point contact ball bearing 74, and then to the housing 40.

In the example, the axial stop 80 is a nut, screwed onto the first lateral portion 60 of the rotor shaft 56.

In the assembled configuration of the electric motor 20, the side cover 44 is fixed securely to the main part 42, is crossed by the main axis X and is located on the first side 50A of the stator 50. Furthermore, the side cover 44 abuts against the first rolling bearing assembly 70, along the main axis X, so that axial loads exerted on the rotor shaft 56 are transmitted to the main part of the housing by the side cover. In the example, in the assembled configuration of the electric motor 20, the side cover 44 close the housing 40.

In the example, the side cover 44 comprises a peripheral part 82 and a center part 84.

In the assembled configuration of the electric motor 20, the peripheral part 82 is fixedly secured to the main part 42, in the example by screws 86. In addition, the first lateral portion 60 of the rotor shaft 56 extends through the peripheral part 82 and the center part 84 is crossed by the main axis X and fixedly secured to the peripheral part 82. Furthermore, the first rolling bearing assembly 70 is mounted between the first lateral portion 62 of the rotor shaft 56 and the peripheral part 82 of the side cover 44. Moreover, the outer rings 74D and 76C of the four-point contact ball bearing 74 and of the cylindrical roller bearing 76 of the first rolling bearing assembly 70 are axially secured, along the main axis X, between the peripheral part 82 and the center part 84. In other words, as visible of Figure 3, the outer rings 74D and 76C are axially secured, along the main axis X, between the peripheral part 82 and the center part 84.

Preferably, the center part 84 of the side cover 44 comprises an anti-rotation pin 88, allowing for proper installation of the four-point contact ball bearing 74: in the assembled configuration of the electric motor 20, the four-point contact ball bearing is mounted between the rotor shaft 56 and the peripheral part 82 with radial clearance with the peripheral part. In other words, a radial clearance, not visible in the Figures, is present between the outer ring 74D and the peripheral part 82. Furthermore, the anti-rotation pin 88 of the center part 84 is in abutment against the outer ring 74D of the four-point contact ball bearing 74, so as to prevent rotation of the outer ring 74D around the main axis X relative to the center part 84 and relative to the housing 40. Hence, the assembly of the four-point contact ball bearing 74, and therefore of the first rolling bearing assembly 70, is in accordance with general specifications.

Preferably, the electric motor 20 comprises grounding electric contacts 90, which are fixedly secured to the center part 84 of the side cover 44 and which are configured to ground the rotor 52. In the example, the grounding electric contacts 90 are carbon brushes, supported by a holding ring 92 fixed to the center part 84, in the example with screws 94. The grounding electric contacts 90, i.e. the carbon brushes, are facing an extremity 56B of the rotor shaft 56, more precisely of the first lateral portion 60 of the rotor shaft, and are contacting said extremity 56B so that any electrical charges carried by the rotor 52 can be conducted towards the housing 40 via the grounding electric contacts 90, i.e. the carbon brushes. Integrating grounding electric contacts 90 in the center part 84 of the side cover 44 is useful to avoid passage of electrical current through the first and second bearing assemblies 70, 72, which is to avoid for improving durability of the bearing assemblies.

Preferably, the electric motor 20 comprises a resolver 96, crossed by the main axis X. In the example, the resolver 96 is fixedly secured to the center part 84 of the side cover 44 and is facing the extremity 56B of the rotor shaft 56 in the assembled configuration of the electric motor 20. In a known manner, the resolver is configured to detect rotation of the rotor shaft 56 around the main axis X. The resolver 96 is useful, for example, to detect the angular position of the rotor shaft 56 around the main axis X and to calculate the rotational speed of the rotor shaft around the main axis X.

The side cover 44 of the housing 40 thus incorporates four independent functions: the side cover 44 acts as an axial stop for the first rolling bearing assembly 70, it integrates the anti-rotation pin 88 to prevent rotation of the outer ring 74D, it integrates the grounding electric contacts 90 to ground the rotor shaft 56 and it integrates the resolver 96. Thus, the compactness of the electric motor 20 is optimized.

In addition to these four functions, the side cover 44 also allows, when removed, i.e. when not secured to the main part 42, to open the housing 40 so as to allow insertion of the rotor 52 into the stator 50, via the first side 50A of the stator. Having the side cover closing the housing 40 in addition to these four functions improves the compactness of the electric motor 20 and facilitates its assembly and its maintenance.

A method for assembling the electric motor 20 is now described.

The assembly method starts by assembling the main part 42 of the housing 40 and the stator 50, by mounting the stator inside of the main part of the housing, i.e. within the internal volume V40.

Independently the rotor 52, the side cover 44 and the first rolling bearing assembly 70 are assembled together, by mounting the rotor shaft 56 with the side cover 44 via the first rolling bearing assembly 70.

In the example, the rotor 52, the side cover 44 and the first rolling bearing assembly 70 are assembled together in three consecutive steps.

Firstly, the rotor shaft 56 is mounted with the peripheral part 82 via the first rolling bearing assembly 70, so that the rotor shaft extends through the peripheral part 82. To this end, the four-point contact ball bearing 74 and the cylindrical roller bearing 76 are mounted on the rotor shaft 56 and the peripheral part 82 is mounted on the bearings 74, 76.

Secondly, the axial stop 80 is fixedly secured to the rotor shaft 56 so as to axially secure the inner rings 74A, 74B, 76A of the first rolling bearing assembly 70 between the shoulder 56A of the rotor shaft 56 and the axial stop 80.

Thirdly, the center part 84 is fixedly secured to the peripheral part 82, in the example with the screws 86, so that the outer rings 74D, 76C of the first rolling bearing assembly 70 are axially secured between the peripheral part 82 and the center part 84.

Then, once the main part 42 and the stator 50 are assembled together and once the rotor 52, the side cover 44 and the first rolling bearing assembly 70 are assembled together, the rotor 52 is assembled with the stator 50, by coaxially mounting the rotor inside of the stator. To this end, the assembly formed by the rotor 52, the side cover 44 and the first rolling bearing assembly 70 is moved as a whole.

Once the rotor 52 is mounted inside of the stator 50, the side cover 44 is in its assembled position and, in the example, closes the housing 40. The assembly method then ends by fixedly securing the side cover 44 to the main part 42, so as to fixedly closing the housing 40. In the example, the peripheral part 82 is fixedly secured to the main part 42, with fixation means, not shown. Preferably, the peripheral part 82 is fixedly secured to the main part 42 using screws, not shown.

Preferably, the output shaft 64 is fixedly secured to the rotor shaft 56 prior to the insertion of the rotor 52 inside of the stator 50. To this end, a diameter D66 of the gear 66 is lower than an internal diameter D78B of the rolling elements 78B of the cylindrical roller bearing 78 of the second rolling bearing assembly 72. In addition, prior to the insertion of the rotor 52 inside of the stator 50, the inner ring 78A of the cylindrical roller bearing 78 is mounted onto the rotor shaft 56 and the outer ring 78C and the rolling elements 78B of the cylindrical roller bearing 78 are mounted onto the housing 40. Hence, the gear 66 can pass through the outer ring 78C during insertion of the rotor 52 inside of the stator 50, and once the rotor 52 is inserted inside of the stator 50, the cylindrical roller bearing 78 is assembled. Furthermore, the diameter D66 of the gear 66 is lower than a diameter D52 of the rotor, corresponding to an internal diameter of the stator 50, so that the gear 66 can pass through the stator 50 during insertion of the rotor inside of the stator.

The assembly of the electric motor 20 is facilitated by the side cover 44 because the side cover is used to provide the four functions discussed here above and, in the example, simultaneously closes the housing 40. Hence, there is no need to install components dedicated to act as an axial stop for the first rolling bearing assembly, to act as an anti-rotation for the four-point contact ball bearing, to carry the resolver 96 or to carry the grounding electric contacts 90, because all these functions are performed by the side cover 44, thus reducing the number of operation required to assemble the electric motor 20.

Furthermore, the maintenance of the electric motor 20 is facilitated by the side cover 44, because simply removing the center part 84 of the side cover gives access to the 4-point contact ball bearing, to the axial stop 80, to the resolver 96 and to the grounding electric contacts 90, thus facilitating access to these components. In addition, the maintenance of the electric motor 20 is also facilitated because the rotor 52, the side cover 44 and the components carried by the rotor and the side cover - i.e. the output shaft 64, the first rolling bearing assembly 70, the axial stop 80, the resolver 96, the grounding electric contacts 90 - can all be extracted from the stator 50 at once, as a whole. Hence, easy access is provided to these components for maintenance or reparation operations.

As an alternative, not shown, the output shaft 64 extends of the first side 50A of the stator 50, instead of on the second side 50B of the stator. Hence, the output shaft 64 extends through the side cover 44, more precisely through the center part 84. In such an alternative, the gear 66 is therefore located on the first side 50A of the stator 50. In such as alternative, the gear 66 and the side cover 44 operates as described here above, except that the center part 84 cannot carry a resolver because it is traversed by the output shaft 64.

As an alternative, not shown, electric motor 20 comprises two output shafts, each output shaft extending on one of the sides 50A, 50B of the stator and carrying a gear. In other words, the electric motor 20 comprises two gears, each engaging with the transmission 82 of the drive unit 16.

As an alternative, not shown, the drive unit 16 comprises more than one electric motor 20 as described here above, for example two electric motors 20, each electric motor providing motor torque to the transmission 28.

Example 1: an electric motor, for an electric vehicle, the electric motor comprising:
- a housing, comprising a main part and a side cover distinct from the main part,
- a stator, mounted inside of the main part of the housing and extending along a main axis,
- a rotor comprising a rotor shaft, the rotor being mounted inside of the main part of the housing and coaxially mounted inside of the stator, and
- a first rolling bearing assembly, the rotor shaft being mounted with the side cover of the housing via the first rolling bearing assembly, the first rolling bearing assembly being located on a first side of the stator, along the main axis, the first rolling bearing assembly being configured to transmit axial loads exerted on the rotor shaft, along the main axis, to the side cover,

wherein, in an assembled configuration of the electric motor:
   - the side cover is fixedly secured to the main part,
   - the side cover is crossed by the main axis and located on the first side of the stator, and
   - the side cover abuts against the first rolling bearing assembly along the main axis, so that said axial loads exerted on the rotor shaft are transmitted to the main part of the housing by the side cover,
and wherein, when the side cover is not secured to the main part, the housing is open so as to allow insertion of the rotor into the stator via the first side of the stator.

Example 2: the electric motor of example 1, further comprising an axial stop, and wherein, in the assembled configuration of the electric motor:
- the axial stop is fixedly secured to the rotor shaft, and
- inner rings of the first rolling bearing assembly are axially secured, along the main axis, between a shoulder of the rotor shaft and the axial stop.

Example 3: the electric motor of any one of examples 1-2, wherein the side cover comprises a peripheral part and a center part and wherein, in the assembled configuration of the electric motor:
- the peripheral part is fixedly secured to the main part,
- the rotor shaft extends through the peripheral part,
- the first rolling bearing assembly is mounted between the rotor shaft and the peripheral part,
- the center part is crossed by the main axis and fixedly secured to the peripheral part, and
- outer rings of the first rolling bearing assembly are axially secured, along the main axis, between the peripheral part and the center part.

Example 4: the electric motor of example 3, wherein the first rolling bearing assembly comprises a four-point contact ball bearing, wherein the center part of the side cover comprises an anti-rotation pin and wherein, in the assembled configuration of the electric motor:
- the four-point contact ball bearing is mounted between the rotor shaft and the peripheral part with radial clearance with the peripheral part, and
- the anti-rotation pin of the center part is in abutment against an outer ring of the four-point contact ball bearing so as to prevent rotation of said outer ring around the main axis relative to the center part.

Example 5: the electric motor of any one of examples 1-4, wherein the first rolling bearing assembly is further configured to transmit radial loads exerted on the rotor shaft, radially to the main axis, to the main part of the housing via the side cover.

Example 6: the electric motor of example 5, wherein the first rolling bearing assembly comprises a four-point contact ball bearing and a cylindrical roller bearing.

Example 7: the electric motor of example 5, wherein the first rolling bearing assembly comprises only a ball bearing.

Example 8: the electric motor of example 5, wherein the first rolling bearing assembly comprises only a tapered roller bearing.

Example 9: the electric motor of any one of examples 1-8, further comprising grounding electric contacts configured to ground the rotor and wherein the grounding electric contacts are fixedly secured to the side cover in the assembled configuration of the electric motor.

Example 10: the electric motor of any one of examples 1-9, further comprising a second rolling bearing assembly, the rotor shaft being further mounted with the housing via the second rolling bearing assembly, the second rolling bearing assembly being located on a second side of the stator opposed to the first side, along the main axis.

Example 11: the electric motor of example 10, wherein the second rolling bearing assembly is configured to transmit radial loads exerted on the rotor shaft, radially to the main axis, to the main part of the housing.

Example 12: the electric motor of any one of examples 10-11, further comprising a gear, located on the second side of the stator and configured to be driven in rotation around the main axis by the rotor shaft.

Example 13: the electric motor of example 12, wherein a diameter of the gear is lower than an internal diameter of rolling elements of the second rolling bearing assembly.

Example 14: the electric motor of any one of examples 1-13, further comprising a resolver, crossed by the main axis, fixedly secured to the side cover and facing the rotor shaft in the assembled configuration of the electric motor, the resolver being configured to detect rotation of the rotor shaft around the main axis.

Example 15: the electric motor of any one of examples 1-13, further comprising a gear, located on the first side of the stator and configured to be driven in rotation around the main axis by the rotor shaft, and wherein the rotor shaft extends through the side cover.

Example 16: the electric motor further comprises two gears, a first gear being located on the first side of the stator and being configured to be driven in rotation around the main axis by the rotor shaft, the rotor shaft extends through the side cover, a second gear being located on the second side of the stator and being configured to be driven in rotation around the main axis by the rotor shaft.

Example 17: the electric motor of any one of examples 1-16, wherein, in the assembled configuration of the electric motor, the side cover closes the housing.

Example 18: a drive unit, for an electric vehicle, the drive unit comprising:
- the electric motor of any one of examples 1-17,
- at least one drive shaft, configured to drive at least one drive wheel of the electric vehicle, and
- a transmission, connected to the electric motor and to the at least one drive shaft so as to be driven by the electric motor and so as to drive the at least one drive shaft.

Example 19: an electric vehicle, comprising at least one drive wheel and the drive unit of example 18, wherein the at least one drive wheel is driven by the drive unit.

Example 20: a method, for assembling the electric motor of any one of examples 1-17, the method comprising:
- assembling the main part of the housing and the stator by mounting the stator inside of the main part of the housing,
- assembling the rotor, the side cover and the first rolling bearing assembly by mounting the rotor shaft with the side cover via the first rolling bearing assembly,
- subsequently to said assembling of the main part of the housing and stator and subsequently to said assembling of the rotor, side cover and first rolling bearing assembly, coaxially mounting the rotor inside of the stator, and
- subsequently to said mounting of the rotor inside of the stator, fixedly securing the side cover to the main part to close the housing.

Example 21: the method of example 20, wherein the electric motor further comprises an axial stop, wherein the side cover comprises a peripheral part and a center part, wherein assembling the rotor, the side cover and the first rolling bearing assembly by mounting the rotor shaft with the side cover via the first rolling bearing assembly further comprises:
- mounting the rotor shaft with the peripheral part via the first rolling bearing assembly, so that the rotor shaft extends through the peripheral part,
- subsequently to said mounting of the rotor shaft with the peripheral part, fixedly securing the axial stop to the rotor shaft so as to axially secure inner rings of the first rolling bearing assembly between a shoulder of the rotor shaft and the axial stop,
- subsequently to said fixedly securing of the axial stop to the rotor shaft, fixedly securing the center part to the peripheral part, so that outer rings of the first rolling bearing assembly are axially secured between the peripheral part and the center part,
and wherein fixedly securing the side cover to the main part comprises fixedly securing the peripheral part to the main part.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An electric motor (20), for an electric vehicle (10), the electric motor comprising:
- a housing (40), comprising a main part (42) and a side cover (44) distinct from the main part (42),
- a stator (50), mounted inside of the main part (42) of the housing (40) and extending along a main axis (X),
- a rotor (52) comprising a rotor shaft (56), the rotor being mounted inside of the main part (42) of the housing (40) and coaxially mounted inside of the stator (50), and
- a first rolling bearing assembly (70), the rotor shaft (56) being mounted with the side cover (44) of the housing (40) via the first rolling bearing assembly (70), the first rolling bearing assembly (70) being located on a first side (50A) of the stator (50), along the main axis (X), the first rolling bearing assembly (70) being configured to transmit axial loads exerted on the rotor shaft (56), along the main axis (X), to the side cover (44),
wherein, in an assembled configuration of the electric motor (20):
- the side cover (44) is fixedly secured to the main part (42),
- the side cover (44) is crossed by the main axis (X) and located on the first side (50A) of the stator (50), and
- the side cover (44) abuts against the first rolling bearing assembly (70) along the main axis (X), so that said axial loads exerted on the rotor shaft (56) are transmitted to the main part (42) of the housing (40) by the side cover (44),
and wherein, when the side cover (44) is not secured to the main part (42), the housing (40) is open so as to allow insertion of the rotor (52) into the stator (50) via the first side (50A) of the stator (50).

2. The electric motor (20) of claim 1, further comprising an axial stop (80), and wherein, in the assembled configuration of the electric motor (20):
- the axial stop (80) is fixedly secured to the rotor shaft (56), and
- inner rings (74A, 74B, 76A) of the first rolling bearing assembly (70) are axially secured, along the main axis (X), between a shoulder of the rotor shaft (56) and the axial stop (80).

3. The electric motor (20) of any one of claims 1-2, wherein the side cover (44) comprises a peripheral part (82) and a center part (84) and wherein, in the assembled configuration of the electric motor (20):
- the peripheral part (82) is fixedly secured to the main part (42),
- the rotor shaft (56) extends through the peripheral part (82),
- the first rolling bearing assembly (70) is mounted between the rotor shaft (56) and the peripheral part (82),
- the center part (84) is crossed by the main axis (X) and fixedly secured to the peripheral part (82), and
- outer rings (74D, 76C) of the first rolling bearing assembly (70) are axially secured, along the main axis (X), between the peripheral part (82) and the center part (84).

4. The electric motor (20) of claim 3, wherein the first rolling bearing assembly (70) comprises a four-point contact ball bearing (74), wherein the center part (84) of the side cover (44) comprises an anti-rotation pin (88) and wherein, in the assembled configuration of the electric motor (20):
- the four-point contact ball bearing (74) is mounted between the rotor shaft (56) and the peripheral part (82) with radial clearance with the peripheral part (82), and
- the anti-rotation pin (88) of the center part (84) is in abutment against an outer ring (74D) of the four-point contact ball bearing (74) so as to prevent rotation of said outer ring (74D) around the main axis (X) relative to the center part (84).

5. The electric motor (20) of any one of claims 1-4, wherein the first rolling bearing assembly (70) is further configured to transmit radial loads exerted on the rotor shaft (56), radially to the main axis (X), to the main part (42) of the housing (40) via the side cover (44).

6. The electric motor (20) of claim 5, wherein the first rolling bearing assembly (70) comprises a four-point contact ball bearing (74) and a cylindrical roller bearing (76).

7. The electric motor (20) of any one of claims 1-6, further comprising grounding electric contacts (90) configured to ground the rotor (52) and wherein the grounding electric contacts (90) are fixedly secured to the side cover (44) in the assembled configuration of the electric motor (20).

8. The electric motor (20) of any one of claims 1-7, further comprising a second rolling bearing assembly (72), the rotor shaft (56) being further mounted with the housing (40) via the second rolling bearing assembly (72), the second rolling bearing assembly (72) being located on a second side (50B) of the stator (50) opposed to the first side (50A), along the main axis (X).

9. The electric motor (20) of any one of claims 1-8, further comprising a resolver (96), crossed by the main axis (X), fixedly secured to the side cover (44) and facing the rotor shaft (56) in the assembled configuration of the electric motor (20), the resolver (96) being configured to detect rotation of the rotor shaft (56) around the main axis (X).

10. The electric motor (20) of any one of claims 1-8, further comprising a gear, located on the first side (50A) of the stator (50) and configured to be driven in rotation around the main axis (X) by the rotor shaft (56), and wherein the rotor shaft (56) extends through the side cover (44).

11. The electric motor (20) of any one of claims 1-10, wherein, in the assembled configuration of the electric motor (20), the side cover (44) closes the housing (40).

12. A drive unit (16), for an electric vehicle (10), the drive unit (16) comprising:
- the electric motor (20) of any one of claims 1-11,
- at least one drive shaft (22, 24), configured to drive at least one drive wheel (12, 14) of the electric vehicle (10), and
- a transmission (28), connected to the electric motor (20) and to the at least one drive shaft (22, 24) so as to be driven by the electric motor (20) and so as to drive the at least one drive shaft (22, 24).

13. An electric vehicle (10), comprising at least one drive wheel (12, 14) and the drive unit (16) of claim 12, wherein the at least one drive wheel is driven by the drive unit.

14. A method, for assembling the electric motor (20) of any one of claims 1-11, the method comprising:
- assembling the main part (42) of the housing (40) and the stator (50) by mounting the stator (50) inside of the main part (42) of the housing (40),
- assembling the rotor (52), the side cover (44) and the first rolling bearing assembly (70) by mounting the rotor shaft (56) with the side cover (44) via the first rolling bearing assembly (70),
- subsequently to said assembling of the main part (42) of the housing (40) and stator (50) and subsequently to said assembling of the rotor (52), side cover (44) and first rolling bearing assembly (70), coaxially mounting the rotor (52) inside of the stator (50), and
- subsequently to said mounting of the rotor (52) inside of the stator (50), fixedly securing the side cover (44) to the main part (42).

15. The method of claim 14, wherein the electric motor (20) further comprises an axial stop (80), wherein the side cover (44) comprises a peripheral part (82) and a center part (84), wherein assembling the rotor (52), the side cover (44) and the first rolling bearing assembly (70) by mounting the rotor shaft (56) with the side cover (44) via the first rolling bearing assembly (70) further comprises:
- mounting the rotor shaft (56) with the peripheral part (82) via the first rolling bearing assembly (70), so that the rotor shaft (56) extends through the peripheral part (82),
- subsequently to said mounting of the rotor shaft (56) with the peripheral part (82), fixedly securing the axial stop (80) to the rotor shaft (56) so as to axially secure inner rings (74A, 74B, 76A) of the first rolling bearing assembly (70) between a shoulder of the rotor shaft (56) and the axial stop (80),
- subsequently to said fixedly securing of the axial stop (80) to the rotor shaft (56), fixedly securing the center part (84) to the peripheral part (82), so that outer rings (74D, 76C) of the first rolling bearing assembly (70) are axially secured between the peripheral part (82) and the center part (84),
and wherein fixedly securing the side cover (44) to the main part (42) comprises fixedly securing the peripheral part (82) to the main part (42).
